# EUROPEAN PATENT APPLICATION

(11) **EP 4 459 169 A1**
(43) Date of publication of application: **06.11.2024**
(21) Application number: 22916880.2
(22) Date of filing: 28.12.2022
(51) Int. Cl.: F16L 57/00, G21C 9/00

(54) **RESTRAINING SEAL**

(30) Priority: 29.12.2021 RU 2021139685
(71) Applicant: Joint Stock Company "Atomenergoproekt", Moscow, 107996 (RU); Science and Innovations - Nuclear Industry Scientific Development, Private Enterprise, Moscow 119017 (RU)
(72) Inventor: MITICHKIN, Aleksandr Grigoryevich, Saint Petersburg, 198332 (RU); TISHCHENKO, Aleksandr Yuryevich, Saint Petersburg, 192241 (RU); VERNER, Aleksandr Alekseyevich, Saint Petersburg, 197350 (RU); VALAKH, Roman Andreyevich, Saint Petersburg, 197350 (RU); MAGOLA, Igor Anatolyevich, Saint Petersburg, 197345 (RU); KURIKOV, Nikolay Nikolayevich, Saint Petersburg, 197371 (RU)
(74) Representative: Osmans, Voldemars
(86) International application number: PCT/RU2022/000401
(87) International publication number: WO 2023/128810

(57) **Abstract**

A limit stop relates to devices for limiting the effect of severe accident consequences on process equipment connected by pipelines passing through walls. The stop may be used, in particular, in the nuclear industry. The limit stop installed in a protective wall. The stop is made in the form of an anchor with horizontal grooves and an insert into the pipeline with horizontal teeth. The anchor is mounted on a protective wall. The insert is installed on the pipeline from the outer side of the protective wall. The anchor and insert are made with the possibility of locking the teeth in the grooves during torsion. The insert is provided with a postulated break site.

The stop makes it possible to increase the safety of operation of high-pressure pipelines.

## Description

### TECHNICAL FIELD

The invention relates to devices for limiting the effect of severe accident consequences on process equipment connected by pipelines passing through walls, and may be used, in particular, in the nuclear industry.

### BACKGROUND ART

Main steam and feed water piping runs from the nuclear island, where the steam generators and main steam isolation Valve (MSIVs) are located, through the space between the two containment walls, where devices operated by nuclear power plant (NPP) personnel are located. The problem with placing pressurized main steam and feed water pipelines between two walls is that when an emergency occurs, the loads on the pipeline can be very large, while occurring in a very short time: time of load occurrence up to 10000 kN - about 0.2 s. The pipeline itself is made of flexible materials with low thermal conductivity, since the space between the protective walls should be thermally insulated from the steam chamber for personnel access. This could lead to a sudden jerk of the pipeline toward or away from the nuclear island containing the steam chamber, resulting in the destruction of the MSIVs necessary for correct operation of the passive heat removal system (PHRS) during an accident, and steam leakage from the steam generator, which in turn could lead to boiling of the coolant in the NPP primary circuit and reactor. Such a threat reduces the safety of nuclear power plants. Similar problems can arise when also using current conduits or any other penetrations through two protective walls.

Thus, the penetration of the main steam and feed water pipeline through the protective walls must meet the following conditions:
- In normal operation mode, allow temperature displacements of up to 100 mm in the horizontal direction through the protective walls.
- In design basis accident mode, block the pipeline in the penetration in such a way as to prevent its abrupt displacement with destruction of the MSIVs in the turbine room.
- In severe accident mode leading to an unavoidable pipeline rupture, it is necessary to ensure that the pipeline is ruptured in the space outside the protective walls.

Various technical solutions have been used to solve this problem. Known, in particular, are solutions related to fixation of a pipeline in a protective wall in order to prevent its sharp pulling out in case of an accident, for example, according to RF patent for utility model No. 204147 (publ. on 11.05. 2021), in which the pipeline rupture limiter connected by means of a welded seam to the fitting pipe includes a sleeve mounted above the welded seam of the pipeline, made of two symmetrical halves provided with longitudinal mutually oriented flanges fastened by threaded joints. With its end flanges, the sleeve cooperates with the mounting elements welded to the pipeline, wherein the sleeve has a variable diameter and additionally cooperates with the mounting elements welded to the outer surface of the fitting pipe.

Such pipeline rupture limiter allows to prevent negative consequences of pipeline and fitting pipe weld rupture and can be applied in various branches of economy, but it does not allow to realize temperature horizontal displacements in the normal operation mode, and in case of design basis accident to limit the pipeline pulling outward through the protective wall, which threatens to destroy the equipment located on the side of the nuclear island.

The closest in terms of solved problems and functional purpose to the present invention is RF patent for utility model No. 193982 (publ.on 22.11.2019), in which the pipeline assembly seam rupture limiter includes a cylindrical sleeve mounted above the pipeline assembly weld seam, which is in contact with the pipeline surface by means of mounting elements, and with end flanges interacting with stops welded to the pipeline surface in the form of radial ribs, the sleeve being made of two half-cylinders, equipped with longitudinal mutually oriented flanges, tightened with threaded connections, and the installation elements of the bushing are made in the form of radial ribs welded to the inner surface of the half-cylinders, with the end flanges of the half-cylinders of the bushing placed on the surface of the pipeline with gaps relative to the surface of the latter and relative to the radial stops.

Such a limiter reduces the effect of whiplash on equipment adjacent to the rupture, but it does not allow for thermal horizontal displacements during normal operation or, in the event of the design basis accident, limit the pulling of the pipeline outward through the protective wall, which threatens to destroy equipment inside the nuclear island.

### SUMMARY OF INVENTION

The objective of the present invention is to create a limit stop having increased safety of use due to exclusion of damage to nuclear island equipment in all, including emergency, modes of NPP operation.

The technical result of the claimed invention is the increase of NPP safety by excluding damage to the nuclear island equipment in all, including emergency, modes of NPP operation.

The technical result is achieved by a limit stop installed in a protective wall, characterized in that the limit stop is made in the form of an anchor with horizontal grooves and an insert into the pipeline with horizontal teeth, the anchor is mounted on a protective wall, the insert is installed on the pipeline from the outer side of the protective wall, the anchor and insert are made with the possibility of locking the teeth in the grooves during torsion, the insert is provided with a postulated break site.

### BRIEF DESCRIPTION OF DRAWINGS

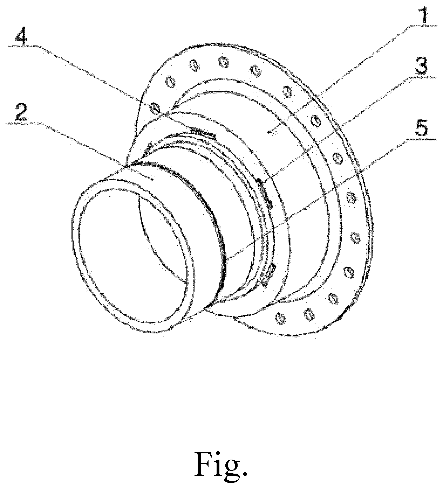

Fig. 1 shows a general view of the limit stop for the main steam and feed water pipelines.

### DESCRIPTION OF EMBODIMENTS

The main steam and feed water pipeline runs from the steam chamber of the nuclear island of the NPP through two protective walls. A limit stop is installed in each protective wall, in the opening through which the pipeline passes, consisting of an anchor 1 with horizontal grooves 3 attached to the protective wall by means of, for example, bolts, and an insert 2 with horizontal teeth 4 attached to the pipeline, with the teeth 4 entering the grooves 3 with the possibility of moving in the horizontal direction.

The limit stop operates as follows. In normal operation mode, the limit stops consisting of an anchor 1 attached to the protective wall and an insert 2 attached to the pipeline ensure temperature horizontal movements of the pipeline. In design basis mode, the pipeline 6 will inevitably receive bending stresses and deformations because the pipeline 6 has bends on the outside of the protective walls. This will cause the teeth of the insert 4, installed on the insert in the pipeline 2, to be wedged in the horizontal grooves 3 of the anchor 1, which will lead to fixation of the pipeline in the protective wall and help to avoid destruction of the steam chamber equipment. In severe accident mode, the load on the pipeline can reach 38.5 MN, so in order to save the equipment of the steam chamber the limit stop is additionally provided with a postulated break site 5 located outside the protective wall and preventing the pipeline from being pulled out of the building. The postulated break site 5 may be in the form of a weakened section of the pipe insert, such as an annular groove designed to rupture when appropriate loads are reached.

The limit stop allows to increase the safety of operation of high pressure pipelines and can be applied in the energy industry.

## Claims

1. A limit stop installed in a protective wall, **characterized in that** the stop is made in the form of an anchor with horizontal grooves and an insert into the pipeline with horizontal teeth, the anchor is mounted on a protective wall, the insert is installed on the pipeline from the outer side of the protective wall, the anchor and insert are made with the possibility of locking the teeth in the grooves during torsion, the insert is provided with a postulated break site.
